Europäisches Patentamt

European Patent Office

Office européen des brevets

(11) Veröffentlichungsnummer: **0 008 801**
A1

## (12) EUROPÄISCHE PATENTANMELDUNG

(21) Anmeldenummer: **79103345.9**

(22) Anmeldetag: **07.09.79**

(51) Int. Cl.³: **G 03 B 21/132**

(30) Priorität: **08.09.78 DE 2839681**

(43) Veröffentlichungstag der Anmeldung:
**19.03.80 Patentblatt 80/6**

(84) Benannte Vertragsstaaten:
**AT CH FR GB IT NL SE**

(71) Anmelder: **Ritzerfeld, Willy**
**Wolframstrasse 84-92**
**D-1000 Berlin 42(DE)**

(72) Erfinder: **Ritzerfeld, Willy**
**Wolframstrasse 84-92**
**D-1000 Berlin 42(DE)**

(54) **Tageslichtprojektor.**

(57) Ein Tageslichtprojektor ist mit einem die Abfuhr der von der Projecktionslampe erzeugten Wärme aus dem Gehäuseinnern bewirkenden Lüfter (4) und einem über die transparente Arbeitsplatte geführten Folienband (3) ausgestattet. Der Antrieb des Lüfters (4) und die Verschiebung des Folienbandes (3) erfolgen durch den gleichen Motor (5), derart, daß wahlweise nach der gewünschten Verschiebungsrichtung die Achse (22; 23) jeweils einer der beiden das Folienband (3) tragenden Spulen (1; 2) an die Motorachse kuppelbar ist.

EP 0 008 801 A1

-1-

Dipl.-Ing. Willy Ritzerfeld
Franzensbader Str. 21, 1000 Berlin 33

- - - - - - - - - - - - - - - - - - - - -

7. September 1978

Tageslichtprojektor
————————————————

Die Erfindung betrifft einen Tageslichtprojektor, bei dem
in einem nach oben durch eine durchsichtige Arbeitsplatte
begrenzten Gehäuse eine Fresnel-Linse, eine Projektionslampe und ein Lüfter für die Kühlung des Gehäuseinneren
angeordnet sind und bei dem über die Arbeitsplatte ein zu
beschriftendes, transparentes und auf an zwei gegenüberliegenden Seiten der Arbeitsplatte angeordneten Spulen
gelagertes Folienband geführt wird.

Bei derartigen Tageslichtprojektoren erfolgt die Weiterbewegung des Folienbandes in der Regel mit Hilfe von manuell
betätigbaren, an den Spulenachsen befestigten Drehknöpfen.
Eine auf diese Weise vorgenommene Verschiebung des Bandes
ist umständlich und für die Bedienungsperson insbesondere
dann lästig, wenn sie gleichzeitig die nicht mehr benötigte
Beschriftung auf dem Folienband entfernt.

Es ist daher die Aufgabe der vorliegenden Erfindung, eine
erleichterte Bedienbarkeit eines solchen Tageslichtprojektors
durch eine motorische Weiterbeförderung des Folienbandes

-2-

zu erreichen, wobei eine zusätzliche Antriebsquelle jedoch nicht geschaffen werden soll. Diese Aufgabe wird bei dem anfangs genannten Projektor erfindungsgemäß dadurch gelöst, daß zur Verschiebung des Folienbandes die Achse einer der beiden das Folienband tragenden Spulen an den den Lüfter treibenden Motor kuppelbar ist. Weitere vorteilhafte Ausgestaltungen dieses Tageslichtprojektors ergeben sich aus den Unteransprüchen.

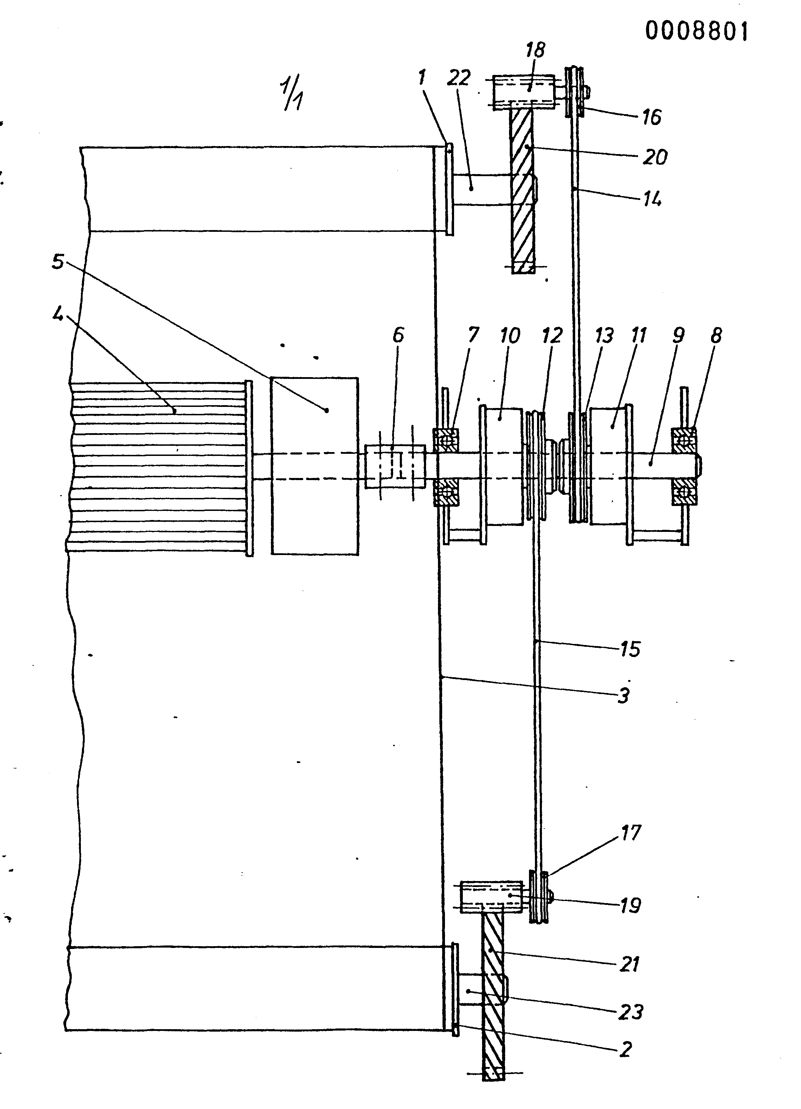

Die Erfindung wird im folgenden anhand eines in der Figur dargestellten Ausführungsbeispiels näher erläutert. Die Figur zeigt in der Draufsicht in schematischer Darstellung die für die Erfindung relevanten Teile eines Tageslichtprojektors.

Auf einer nicht gezeigten Arbeitsplatte wird ein auf zwei an entgegengesetzten Seiten der Arbeitsplatte angeordneten Spulen 1 und 2 gelagertes transparentes Folienband 3 verschoben. Im Projektorgehäuse unterhalb der Arbeitsplatte befinden sich der für die Kühlung des Gehäuseinneren vorgesehene Lüfter 4 und dessen Antriebsmotor 5. Mit der Achse des Motors 5 ist durch ein Verbindungsstück 6 eine in zwei Lagern 7 und 8 gehaltene Achse 9 starr verbunden. Die Achse 9 trägt die Anker von zwei Elektrokupplungen 10 und 11. Die Anker drehen sich mit der Achse 9, während die Gehäuse und

-3-

die Wicklungen der Elektrokupplungen 10 und 11 feststehend und mit den Lagern 7 und 8 verbunden sind. Auf der Achse 9 befinden sich weiterhin frei drehbar und in Längsrichtung der Achse verschiebbar zwei Riemenscheiben 12 und 13, von denen jede einer der beiden Elektrokupplungen 10 und 11 zugeordnet ist. Durch Erregung einer der Elektrokupplungen wird die zugehörige Riemenscheibe gegen den Anker der Kupplung gezogen, so daß sie über den Anker von der Achse 9 mitgenommen und in Drehung versetzt wird.

Über jeweils einen Riemen 14 bzw. 15 sind die Riemenscheiben 12 und 13 mit jeweils einer weiteren Riemenscheibe 16 bzw. 17 verbunden. An den Riemenscheiben 16 und 17 ist jeweils eine Schnecke 18 bzw. 19 befestigt, von denen jede ein Schneckenrad 20 bzw. 21 treibt. Die Schneckenräder 20 und 21 sind jeweils fest auf einer der Achsen 22 und 23 der Spulen 1 und 2 angeordnet.

Die Erregung einer der Elektrokupplungen 10 bzw. 11 erfolgt vorzugsweise durch Niederdrücken der zugeordneten von zwei Tasten, wobei die Dauer der Erregung durch die Dauer des Niederdrückens bestimmt wird. Eine andere Möglichkeit besteht darin, den Endzeitpunkt der Erregung in Abhängigkeit von der Lage von auf dem Folienband 3 befindlichen Markierungen festzulegen. Die Erregung der Elektrokupplung 10 bewirkt somit eine Übertragung der Drehbewegung der Achse des Motors 5 auf

-4-

die Spulenachse 23 und die Erregung der Elektrokupplung 11 entsprechend auf die Spulenachse 22. Die Riemenscheiben 12, 13 und 16, 17 sowie die Schnecken 18, 19 und die Schneckenräder 20, 21 sind so ausgelegt, daß die Drehbewegung von der Achse 9 auf die Achsen 22 bzw. 23 stark untersetzt wird. Ferner sind die Schnecken 18, 19 und die Schneckenräder 20, 21 so ausgestaltet, daß die Drehung der Spulen 1 bzw. 2 jeweils ein Aufwickeln des Folienbandes 3 auf die angetriebene Spule bewirkt.

Dipl.-Ing. Willy Ritzerfeld
Franzensbader Str. 21, 1000 Berlin 33
– – – – – – – – – – – – – – – – – –

7. September 1978

## P a t e n t a n s p r ü c h e

1. Tageslichtprojektor, bei dem in einem nach oben durch eine durchsichtige Arbeitsplatte begrenzten Gehäuse eine Fresnel-Linse, eine Projektionslampe und ein Lüfter für die Kühlung des Gehäuseinneren angeordnet sind und bei dem über die Arbeitsplatte ein zu beschriftendes, transparentes und auf an zwei gegenüberliegenden Seiten der Arbeitsplatte angeordneten Spulen gelagertes Folienband geführt wird, dadurch gekennzeichnet, daß zur Verschiebung des Folienbandes (3) die Achse (22; 23) einer der beiden das Folienband (3) tragenden Spulen (1; 2) an den den Lüfter (4) treibenden Motor (5) kuppelbar ist.

2. Tageslichtprojektor nach Anspruch 1, dadurch gekennzeichnet, daß die Wahl der an den Motor (5) kuppelbaren Spulenachse (22; 23) von der gewünschten Verschiebungsrichtung des Folienbandes (3) abhängig ist.

3. Tageslichtprojektor nach Anspruch 1 oder 2, dadurch gekennzeichnet, daß die Spulenachsen (22; 23) jeweils über eine Elektrokupplung (10; 11) an die Achse des Motors (5) kuppelbar sind.

4. Tageslichtprojektor nach Anspruch 3, dadurch gekennzeichnet, daß die Elektrokupplungen (10, 11) durch manuelle Betätigung von Tasten steuerbar sind.

5. Tageslichtprojektor nach Anspruch 3 oder 4, dadurch gekennzeichnet, daß die Elektrokupplungen (10, 11) durch Markierungen auf dem Folienband (3) steuerbar sind.

0008801

1/1

0008801

Nummer der Anmeldung

**Europäisches Patentamt**

**EUROPÄISCHER RECHERCHENBERICHT**

EP 79 103 345.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 2 156 275</u> (BRAUN AG) <br> * Seite 2, Absätze 3 und 4, Seite 3, letzter Absatz; Fig. 3 * <br> -- | 1 |
| | <u>DE - A - 1 572 538</u> (LEHR- UND LERNMIT-TEL-SCHULEINRICHTUNGEN FROHMUT AUGST) <br> * Seite 2, Absatz 2; Fig. 1 * <br> -- | 1,2 |
| A | <u>DE - B - 1 117 320</u> (E. LEITZ) <br> * Anspruch 1; Fig. 1, 2 * <br> -- | 1,2 |
| A | <u>DE - B - 1 288 335</u> (HANNAH) <br> * Anspruch 1; Fig. 1 und 2 * <br> -- | 5 |
| A | <u>DE - B - 1 215 955</u> (ELBE-KAMERA) <br> * Anspruch 1; Fig. 2 * <br> ---- | |

**KLASSIFIKATION DER ANMELDUNG (Int. Cl.3)**

G 03 B 21/132

**RECHERCHIERTE SACHGEBIETE (Int. Cl.3)**

G 03 B 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 27-11-1979 | HOPPE |

EPA form 1503.1 06.78